# EUROPÄISCHE PATENTSCHRIFT

(11) **EP 4 627 310 B1**
(45) Veröffentlichungstag und Bekanntmachung des Hinweises auf die Patenterteilung: **02.09.2026**
(21) Anmeldenummer: 23821527.1
(22) Anmeldetag: 01.12.2023
(51) Int. Cl.: G01M 3/32

(54) **SYSTEM UND VERFAHREN ZUR ÜBERPRÜFUNG DER DICHTHEIT VON VERPACKUNGEN**
SYSTEM AND METHOD FOR CHECKING THE SEALING TIGHTNESS OF PACKAGINGS
SYSTÈME ET PROCÉDÉ PERMETTANT DE VÉRIFIER L'ÉTANCHÉITÉ D'EMBALLAGES

(30) Priorität: 02.12.2022 DE 102022132050
(43) Veröffentlichungstag der Anmeldung: 08.10.2025
(73) Patentinhaber: Witt GmbH & Co. Holding und Handels-KG, 58454 Witten (DE)
(72) Erfinder: BENDER, Martin, 44267 Dortmund (DE)
(74) Vertreter: Schneiders & Behrendt Bochum
(86) Internationale Anmeldenummer: PCT/EP2023/083932
(87) Internationale Veröffentlichungsnummer: WO 2024/115739

(56) Entgegenhaltungen:
- EP-A1- 3 266 718
- CN-A- 106 289 664
- CN-A- 109 506 858
- CN-U- 210 269 081
- DE-A1- 102019 108 887
- US-B2- 10 864 555

## Beschreibung

Die Erfindung betrifft ein System zur Überprüfung der Dichtheit einer Vielzahl von unter Schutzgas stehenden Verpackungen, mit mindestens einem Längsförderer zur Beförderung von in den Verpackungen befindlichen Produkten, mindestens einem Roboter und mindestens einer Prüfkammer, welche seitlich neben dem Längsförderer angeordnet ist, mittels eines der Prüfkammer zugeordneten Deckels gasdicht verschließbar ist, eine Schutzgas-Sensorik und/oder eine Druck-Sensorik aufweist und im verschlossenen Zustand mit Vakuum beaufschlagbar ist, wobei der Roboter dazu eingerichtet ist, die in der Verpackung befindlichen Produkte vom Längsförderer in die Prüfkammer auf eine Bodenfläche der Prüfkammer und von der Bodenfläche der Prüfkammer zurück auf den Längsförderer zu legen. Des Weiteren betrifft die Erfindung ein Verfahren zum Betrieb eines solchen Systems.

Die CN 109 506 858 A beschreibt ein System zur Überprüfung der Dichtheit einer Vielzahl von unter Schutzgas stehenden Verpackungen mit einem ersten Förderer zur Anförderung von zu prüfenden Verpackungen und einem zweiten Förderer zum Abtransport geprüfter Verpackungen, einem Greifmechanismus und einer Prüfschublade, die zwischen den beiden Förderern angeordnet ist, wobei der Greifmechanismus dazu eingerichtet ist, die Verpackung vom ersten Förderer in die Prüfschublade und nach der Prüfung von der Prüfschublade auf den zweiten Förderer zu legen.

Die WO 2013 / 182 251 A1 offenbart ein mehrstufiges Verfahren zur Dichtheitsprüfung von geschlossenen und gefüllten Behältern sowie ein entsprechendes System zur Durchführung des Verfahrens mit zwei Dichtheitsprüfstationen, in denen die Behälter nacheinander zweimal getestet werden. Zur Erhöhung der Durchlaufrate wird vorgeschlagen, mehrere Packungen gleichzeitig in einer der Dichtheitsprüfstationen zu testen und anschließend zu intervenieren zur aufwendigen Identifizierung des oder der ausgelaufenen Behälter in der Testung.

Die DE 10 2012 216 868 A1 beschreibt eine Aufnahmevorrichtung für eine Dichtigkeitsprüfung von Prüflingen mittels Differenzdruckprüfung.

Die EP 3 266 718 A1 beschreibt eine Verpackungsmaschine mit einem Roboter, der mehrere Saugreifer aufweist.

Die US 10 864 555 B2 offenbart ein robotergestütztes Vakuumsortiersystem mit einem an einem Sortierroboter angebrachten Sauggreifmechanismus.

Die CN 106 289 664 A beschreibt eine Vorrichtung zum Prüfen von Dichtungsringen.

Die CN 210 269 081 U beschreibt eine Vorrichtung zur Überprüfung der Dichtheit von Produkten, insbesondere Brennstoffzellen. Die Vorrichtung weist ein Entlüftungsventil auf, um Gase, wie beispielsweise Stickstoff, wieder aus einer Verbindungsleitung zu entfernen.

Die DE 10 2019 108 887 A1 beschreibt ein eingangs erwähntes System zur Überprüfung der Dichtheit von unter Schutzgas stehenden Verpackungen (z.B. Lebensmittelverpackungen). Als Schutzgas wird dort CO₂ verwendet. Die Überprüfung erfolgt, indem das einzelne zu prüfende Produkt in einer geschlossenen Prüfkammer mit Vakuum beaufschlagt wird. Das Volumen der Prüfkammer wird dann auf austretendes CO₂, welches dort beispielsweise als Schutzgas eingesetzt wird, getestet. Das dort beschriebene System sieht auch die Integration der Detektionsmethode in einer Produktionslinie vor, wobei mittels eines Roboters die Produkte jeweils einzeln oder gleichzeitig zu mehreren in einer einzigen Prüfkammer abgelegt werden. Die Prüfkammer wird dann verschlossen und die Überprüfung durchgeführt. Die Prüfkammer öffnet sich wieder und das geprüfte Produkt oder die geprüften Produkte werden schließlich mittels des Roboters gegen die nächsten zu prüfenden Produkte ausgetauscht. Der dort beschriebene Roboter ist am Ende eines Längsförderers angeordnet, der die Produkte auf eine weitere Fördervorrichtung oder in die Prüfkammer bewegt.

Alternativ oder zusätzlich zur Schutzgas-Sensorik kann auch eine Druck-Sensorik verwendet werden. Die Prüfkammer wird dann auch mit Vakuum beaufschlagt. Wenn Gas aus der Verpackung austritt und diese somit nicht dicht ist, wird von der Druck-Sensorik kein Vakuum detektiert. Wird dagegen ein Vakuum detektiert, ist Verpackung dicht und das Produkt hat die Überprüfung bestanden.

Nachteilig bei diesem System ist, dass die Produkte entweder einzeln nacheinander in der Prüfkammer überprüft werden müssen oder - für den Fall, dass mehrere Produkte gleichzeitig überprüft werden - lediglich die fehlerhafte Verpackung von mindestens einem der überprüften Produkte festgestellt werden kann. Welches und wie viele der Produkte fehlerhaft sind, kann nicht festgestellt werden. Somit ergeben sich Probleme hinsichtlich der Quantität und/oder der Qualität bei der Überprüfung der einzelnen Produkte. Eine Überprüfung aller Produkte einzeln ist insgesamt nur unter erheblichen Zeitaufwand möglich und würde die Produktion insgesamt unangemessen verlangsamen. Daher wird in der zuletzt genannten Druckschrift auch vorgeschlagen, die Produkte nur stichprobenartig zu überprüfen.

Es ist die Aufgabe der Erfindung, das bekannte System dahingehend weiterzubilden, dass eine höhere Stückzahl von Produkten pro Zeiteinheit einzeln überprüft werden kann. Insbesondere soll eine Lösung für ein System aufgezeigt werden, das eine deutlich verbesserte Durchlaufrate auch bei Einzelprüfung der Proben der Grundgesamtheit bietet.

Zur Lösung dieser Aufgabe schlägt die Erfindung ausgehend von einem System der eingangs genannten Art vor, dass mindestens zwei Prüfkammern entlang des Längsförderers angeordnet sind. Durch die Anordnung mehrerer Prüfkammern ist die gleichzeitige Prüfung mehrerer Produkte jeweils einzeln in einer Prüfkammer möglich. Die gleichzeitige Prüfung mehrerer Produkte jeweils einzeln in einer Prüfkammer ist durch die Anordnung mehrerer Prüfkammern entlang des Längsförderers möglich. Die Prüfkammern ermöglichen mehrere Produkte gleichzeitig zu prüfen, wobei jedes Produkt einzeln in einer der Prüfkammern geprüft wird. Die Erhöhung der Anzahl der Prüfkammern und zusätzlich die Vereinzelung der Produkte bei der Überprüfung in den Prüfkammern verbesserter die Durchlaufrate auch bei Einzelprüfung der Proben der Grundgesamtheit. Die Prüfkammern sind dabei jeweils mit einem separaten Deckel versehen und können daher unabhängig voneinander genutzt werden.

Die Erfindung sieht weiterhin vor, dass der Roboter jeweils mit zwei Sauggreifern versehen ist, welche um eine gemeinsame Drehachse drehbar und bezogen auf die Drehachse gegenüberliegend angeordnet sind. Durch die gegenüberliegende rotierbare Anordnung der Sauggreifer kann der jeweilige Roboter jeweils ein ungeprüftes Produkt vom Längsförderer und ein geprüftes Produkt aus der Prüfkammer gleichzeitig greifen und diese gegeneinander austauschen. Auf diese Weise arbeiten die Prüfkammern gleichsam als Pufferspeicher, in dem die Produkte temporär gespeichert werden. Wenn der Pufferspeicher vollständig gefüllt ist, erfolgt die kontinuierliche Pufferung nach dem First-in-first-out-Prinzip, ohne die Förderung von Produkten entlang des Längsförderers zu verlangsamen. Der Roboter ist dazu in der Lage, ein auf dem Längsförderer antransportiertes Produkt gegen ein geprüftes Produkt auszutauschen, so dass sich insgesamt kein Zeitverzug ergibt.

Eine bevorzugte Ausführungsform der Erfindung sieht vor, dass entlang des Längsförderers beidseitig jeweils mindestens eine Prüfkammer angeordnet ist. Durch die beidseitige Anordnung der Prüfkammern können insgesamt mehr Prüfkammern vorgesehen werden, ohne dass sich das System besonders weit entlang des Längsförderers erstreckt. Eine besonders vorteilhafte Ausführungsform der Erfindung sieht vor, dass entlang des Längsförderers beidseitig jeweils mindestens drei Prüfkammern angeordnet sind. Hierdurch lässt sich eine sehr hohe Durchlaufrate auch bei Einzelprüfung der Produkte in den beidseitig des Längsförderers angeordneten Prüfkammern erreichen. Eine bevorzugte Ausführungsform der Erfindung sieht vor, dass entlang des Längsförderers beidseitig jeweils genau drei Prüfkammern angeordnet sind. Hierdurch lässt sich eine optimale Durchlaufrate auch bei Einzelprüfung der Produkte in den beidseitig des Längsförderers angeordneten Prüfkammern erreichen.

Eine besonders bevorzugte Ausführungsform sieht vor, dass entlang des Längsförderers beidseitig jeweils mindestens zwei Prüfkammern angeordnet sind, vorzugsweise mindestens vier Prüfkammern, und mindestens zwei Roboter vorgesehen sind. Durch die Anordnung weiterer Prüfkammern und weiterer Roboter kann die Anzahl der Überprüfungen pro Zeiteinheit weiter erhöht werden. Eine besonders vorteilhafte Ausführungsform sieht vor, dass entlang des Längsförderers beidseitig jeweils mindestens sechs Prüfkammern angeordnet sind, vorzugsweise insgesamt mindestens zwölf Prüfkammern am Längsförderer, und mindestens zwei Roboter vorgesehen sind. Hierdurch lässt sich eine sehr hohe Durchlaufrate auch bei Einzelprüfung der Produkte in den beidseitig des Längsförderers angeordneten Prüfkammern erreichen. Eine bevorzugte Ausführungsform der Erfindung sieht vor, dass entlang des Längsförderers beidseitig jeweils genau sechs Prüfkammern angeordnet sind, und insgesamt zwölf Prüfkammern am Längsförderer, und genau zwei Roboter vorgesehen sind. Hierdurch lässt sich eine optimale Durchlaufrate auch bei Einzelprüfung der Produkte in den beidseitig des Längsförderers angeordneten Prüfkammern erreichen.

Vorzugsweise sind die Roboter oder der Roboter als Delta-Roboter ausgebildet. Delta-Roboter eignen sich besonders gut, um direkt über dem Längsförderer angeordnet zu werden. Die Achsen des spinnenartigen Delta-Roboters bilden in ihrem Zusammenspiel eine geschlossene kinematische Kette. Die Basis des Delta-Roboters ist dabei oberhalb der sich bewegenden Teile montiert, also beispielsweise an der Decke aufgehängt. Von dort erstrecken sich mindestens drei Gelenkarme. Die Antriebstechnik ist bei dieser Art Roboter speziell: Wenn der Motor die Achsen der Gelenkarme antreibt, bewegt sich die unten montierte Plattform in X-, Y- und Z-Richtung - visuell auf den Seiten eines Parallelogramms. Je nach Anzahl der Freiheitsgrade können Delta-Roboter auch Rotationsbewegungen ausführen. Diese Art von Roboter kann sowohl von einem linearen als auch von einem Drehantrieb bewegt werden. Der Vorteil dieses Aufbaus ist - im Vergleich zu Knickarmrobotern - eine hohe Zielgenauigkeit. Da sich der Motor statt in den Gelenken in der Basis befindet, sind die Roboterarme extrem leicht. Das generiert eine geringe Trägheit und somit hohe erreichbare Geschwindigkeiten und Beschleunigungen.

Vorteilhafterweise ist der Roboter bzw. sind die Roboter mittig über dem Längsförderer angeordnet. Durch die mittige Anordnung über dem Längsförderer sind die Wege zu den Prüfkammern besonders kurz. Die mittige Anordnung über dem Längsförderer macht die beidseitig des Längsförderers angeordneten Prüfkammern für den Roboter gut erreichbar. Zudem wird kein zusätzlicher Bauraum neben dem Längsförderer benötigt.

Sauggreifer eignen sich besonders gut für Pick-and-Place-Prozesse. Hierzu werden die zu bewegenden Gegenstände mittels Saugnäpfen angesaugt und an ihr Ziel verbracht. Die durch die Anzahl an Prüfkammern bestimmte Größe des Pufferspeichers limitiert die maximale Verweilzeit der Produkte in den einzelnen Prüfkammern. Die Verweilzeit muss dabei lang genug sein, um den Messvorgang durchführen zu können. Die Anzahl an Prüfkammern ist zweckmäßig daher so zu bemessen, dass der Durchsatz, d.h. die Anzahl der pro Zeiteinheit mittels des Längsförderers pro Zeiteinheit transportierter Produkte durch die Dichtheitsüberprüfung nicht limitiert wird. Vorzugsweise sind die Prüfkammern mittels einer Vakuumpumpe mit Vakuum beaufschlagbar. Die Vakuumpumpe kann beispielsweise mittels eines Magnetventils und/oder eines pneumatischen Schrägsitzventils geschaltet werden. Insgesamt ergibt sich somit eine besonders zuverlässige Schaltung, um die Prüfkammern mit Vakuum zu beaufschlagen.

Eine bevorzugte Weiterbildung der Erfindung sieht vor, dass der jeweilige Deckel der jeweiligen Prüfkammer mittels einer Deckelfördervorrichtung in eine Schließposition und eine Öffnungsposition bewegbar ist. Die Deckelfördervorrichtung weist bevorzugt ein Scharnier auf, über welches der Deckel klappbar an der Prüfkammer aufgehängt ist. Der Deckel kann über einen bevorzugt pneumatisch angetriebenen Antriebszylinder der Deckelfördervorrichtung zwischen der Öffnungsposition und der Schließposition hin und her bewegt werden. Der Deckel kann zwischen der Öffnungsposition und der Schließposition in einem Öffnungswinkel von null bis 70 Grad bezogen auf die Bodenfläche der Prüfkammer bewegt werden. Bevorzugt wird der Deckel in einen Öffnungswinkel von 60 Grad bezogen auf die Bodenfläche der Prüfkammer bewegt, um die Öffnungsposition zu erreichen. Die vorteilhafterweise pneumatisch angetriebene Deckelfördervorrichtung kann den Deckel in sehr kurzer Zeit in diese Öffnungsposition klappen und von dort zurück in die Schließposition bewegen. Hierdurch lässt sich eine hohe Durchlaufrate auch bei Einzelprüfung der Produkte in den Prüfkammern erreichen. Eine Weiterbildung der Erfindung sieht vor, dass der jeweilige Deckel der jeweiligen Prüfkammer mittels einer Deckelfördervorrichtung in eine Schließposition und eine Öffnungsposition verfahrbar ist, wobei die Deckelfördervorrichtung eine Führungshalterung aufweist, welche bezogen auf die Bodenfläche der Prüfkammer in einem Winkel von 70°-110°, vorzugsweise 80°-100° angeordnet ist. Durch die derart ausgestaltete Deckelfördervorrichtung baut das System insgesamt schmaler, als wenn der Deckel seitlich parallel zur Bodenfläche der Prüfkammer bewegt würde. Trotzdem kann das Produkt von oben in die Prüfkammer eingelegt werden, wenn sich der Deckel in der Öffnungsposition befindet.

Die Deckelförderfördervorrichtung weist vorzugsweise mindestens zwei Laufrollen auf. Mittels der Laufrollen ist eine schnelle und präzise Führung des Deckels in der Führungshalterung möglich, wenn dieser zwischen der Öffnungs- und Schließposition hin und her verfahren wird. Der Deckel bewegt sich auf einer kurvenförmigen Bahn.

Die Erfindung betrifft des Weiteren ein Verfahren für den Betrieb eines vorher definierten Systems zur Überprüfung der Dichtheit einer Vielzahl von unter Schutzgas stehenden Verpackungen, bei welchem
- in einer Verpackung verpackte, zu prüfende Produkte mittels des Längsförderers dem System von einer Eingangsseite zugeführt werden,
- die zu prüfenden Produkte mittels des Roboters bzw. der Roboter vom Längsförderer in die jeweils geöffneten Prüfkammern gelegt werden,
- die jeweilige Prüfkammer mittels des Deckels gasdicht verschlossen wird, indem der Deckel mittels der Deckelfördervorrichtung von der Öffnungsposition in die Schließposition bewegt wird, und anschließend mit Vakuum beaufschlagt wird,
- die Dichtheit der Verpackungen der Produkte mittels der Schutzgas-Sensorik überprüft wird,
- anschließend der Deckel der jeweiligen Prüfkammer mittels der Deckelfördervorrichtung von der Schließposition in die Öffnungsposition verfahren wird und das Produkt mittels des Roboters oder der Roboter die geprüften Produkte aus der jeweiligen Prüfkammer auf den Längsförderer gelegt werden, wobei gleichzeitig mit der Beförderung eines zu prüfenden Produktes vom Längsförderer in die jeweilige Prüfkammer ein geprüftes Produkt aus dieser Prüfkammer mittels des jeweiligen Roboters auf den Längsförderer befördert wird
- und die Produkte mittels des Längsförderers in Richtung einer Ausgangsseite des Systems verbracht werden, wobei geprüfte Produkte, die die Überprüfung der Dichtheit nicht bestanden haben, anschließend ausgeschleust werden.

Eine Weiterbildung des erfindungsgemäßen Verfahrens sieht vor, dass die Überprüfung der Dichtheit in den jeweiligen Prüfkammern in aufeinander abgestimmten Zyklen erfolgt, sodass eine möglichst hohe Stückzahl von Produkten überprüft werden kann.

Besonders bevorzugt sieht das erfindungsgemäße Verfahren vor, dass die Prüfkammern nach der Überprüfung der Dichtheit und Öffnung der Prüfkammer von unten mit Überdruck oder Atmosphäre beaufschlagt wird. Hierdurch wird verhindert, dass nach dem Überprüfungsprozess Schutzgasnester im Prüfkammervolumen verbleiben.

**Das** erfindungsgemäße Verfahren sieht vor, dass gleichzeitig mit der Beförderung eines zu prüfenden Produktes vom Längsförderer in die jeweilige Prüfkammer ein geprüftes Produkt aus dieser Prüfkammer mittels des jeweiligen Roboters auf den Längsförderer befördert wird. Da der jeweilige Roboter jeweils ein ungeprüftes Produkt vom Längsförderer und ein geprüftes Produkt aus der Prüfkammer gleichzeitig greifen und diese gegeneinander austauschen kann, lässt sich eine hohe Durchlaufrate auch bei Einzelprüfung der Produkte in den Prüfkammern erreichen. Die gleichzeitige Beförderung eines zu prüfenden Produktes vom Längsförderer in die jeweilige Prüfkammer und die damit synchrone Beförderung eines geprüften Produkts aus dieser Prüfkammer auf den Längsförderer mittels des gleichen Roboters sorgt insgesamt für eine verbesserte Durchlaufrate auch bei Einzelprüfung der Produkte in den Prüfkammern des Systems.

Besonders bevorzugt sieht das erfindungsgemäße Verfahren vor, dass die Überprüfung der Dichtheit der Verpackungen der Produkte bereits während der Beaufschlagung der Prüfkammern mit Vakuum erfolgt. Hierdurch lässt sich eine verbesserte Durchlaufrate auch bei Einzelprüfung der Produkte in den Prüfkammern erreichen.

Im Folgenden wird die Erfindung anhand der Zeichnungen näher erläutert. Es zeigen:
- Figur 1:: schematisch eine 3D-Ansicht eines erfindungsgemäßen Systems in einem Ausführungsbeispiel;
- Figur 2:: schematisch eine Draufsicht auf das erfindungsgemäße System aus Figur 1;
- Figur 3:: schematisch eine Detailansicht einer Deckelfördervorrichtung eines erfindungsgemäßen Systems in einem Ausführungsbeispiel;
- Figur 4:: schematisch eine Detailansicht einer Deckelfördervorrichtung eines erfindungsgemäßen Systems in einem weiteren Ausführungsbeispiel:
- Figur 5:: schematisch eine Detailansicht auf einen Roboter eines erfindungsgemäßen Systems;
- Figur 6:: schematisch eine weitere Detailansicht auf den Roboter.

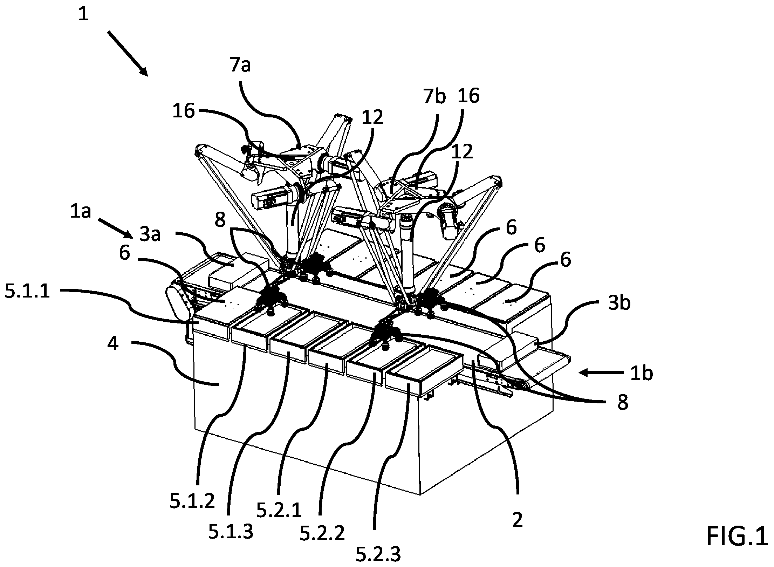

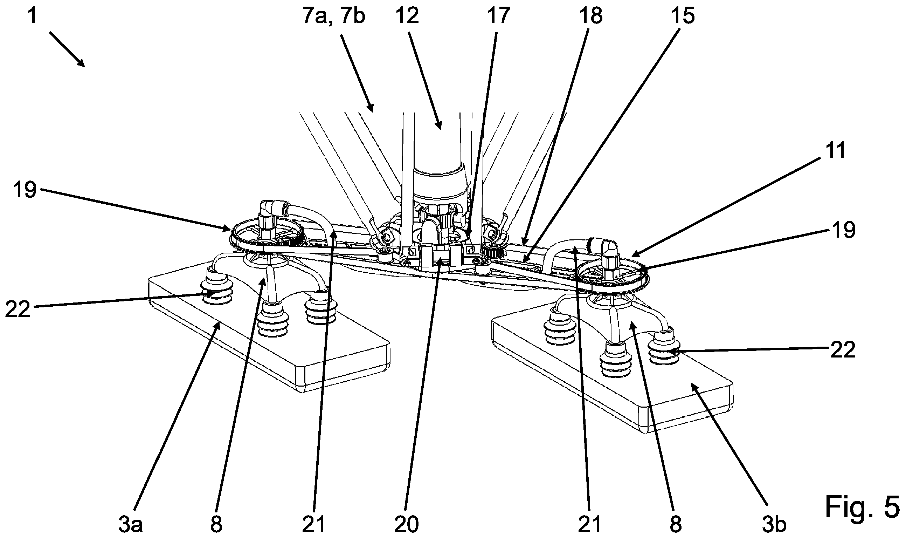

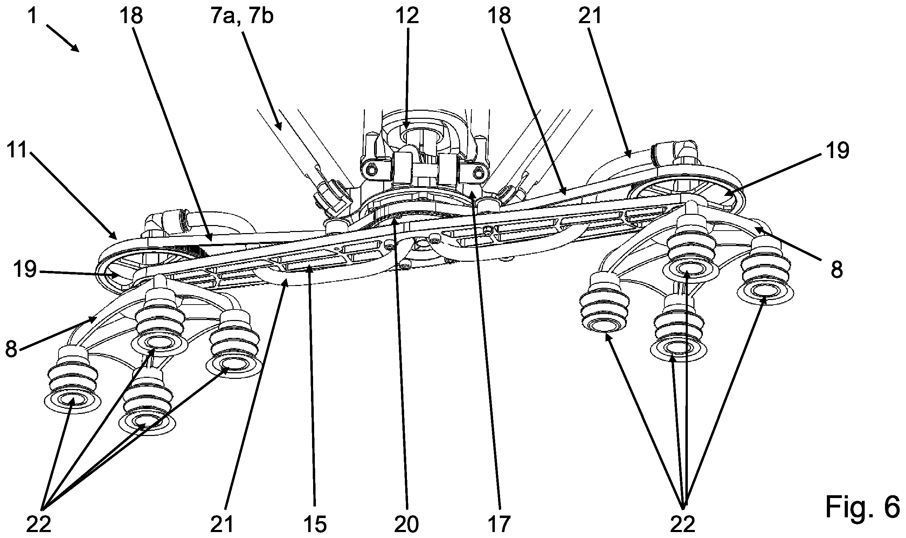

In Figur 1 ist ein erfindungsgemäßes System in seiner Gesamtheit mit dem Bezugszeichen 1 bezeichnet. Mittig im System 1 ist ein Längsförderer 2 angeordnet. Auf dem Längsförderer 2 befinden sich die in Verpackungen angeordneten Produkte 3, die von einer Eingangsseite 1a zu einer Ausgangsseite 1b des Systems 1 mittels des Längsförderers 2 gefördert werden. Von der Eingangsseite 1a kommen die ungeprüften Produkte 3a, welche an der Ausgangsseite 1b nach dem Überprüfungsprozess aus dem System 1 gefördert werden. Um das System 1 ist eine Einhausung 4 angeordnet. In der Einhausung 4 sind insgesamt zwölf Prüfkammern 5 platziert, sechs auf jeder Seite des Längsförderers 2. Die Prüfkammern 5 sind jeweils mittels eines Deckels 6 gasdicht verschließbar. Jede Prüfkammer 1 ist zudem mit einer Vakuumpumpe verbunden (hier nicht dargestellt). Die Vakuumpumpe ist mittels eines ersten Ventils (hier nicht dargestellt) steuerbar. Das erste Ventil kann als Magnetventil oder als pneumatisches Schrägsitzventil ausgeführt sein. Mittig über dem Längsförderer 2 sind zwei Roboter 7a, 7b angeordnet, die hier als Delta-Roboter ausgebildet sind. Die Roboter 7a, 7b können an einer hier nicht dargestellten Decke oder einer anders gearteten Halterung befestigt sein. Die Roboter 7a, 7b verfügen jeweils über zwei Saugreifer 8, die an einer Drehvorrichtung 11 (Fig. 5 und 6) befestigt sind. Die Drehvorrichtung 11 (Fig. 5 und 6) dient dazu, dass die Produkte immer relativ zum Längsförderer 2 und zueinander gleich ausgerichtet sind. Das System 1 ist insgesamt symmetrisch bezogen auf die Längsachse des Längsförderers 2.

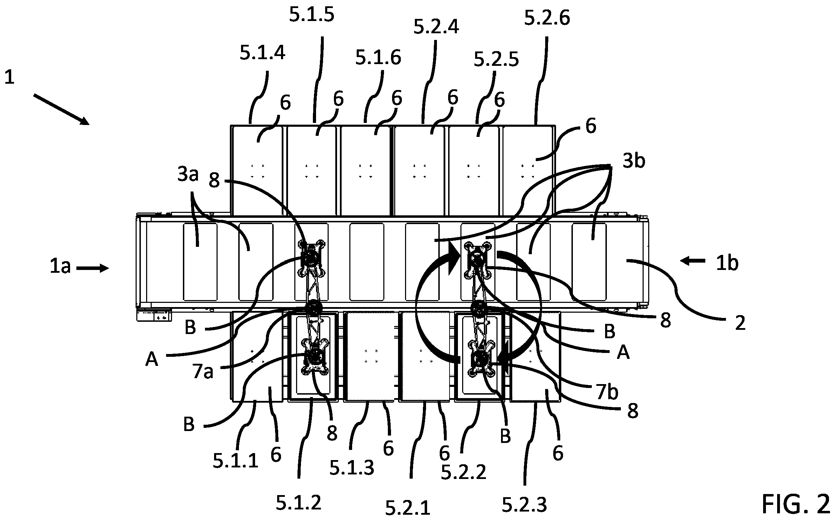

Die Figur 2 zeigt eine Draufsicht auf das erfindungsgemäße System aus Figur 1 während des Überprüfungsprozesses. Jeweils einer der Roboter 7a, 7b bedient hier sechs Prüfkammern 5, d.h. bestückt diese mit Verpackungen der zu prüfenden Produkte 3a und entnimmt die Verpackungen der geprüften Produkte 3b aus den Prüfkammern 5. Der erste Roboter 7a bedient die Prüfkammern 5.1.1-5.1.6, der zweite Roboter 7b die Prüfkammern 5.2.1-5.2.6. Bis auf die Prüfkammern 5.1.2 und 5.2.2, sind die übrigen Prüfkammern 5.1.1, 5.1.3-5.1.6, 5.2.1, 5.2.3-5.2.6 gasdicht verschlossen. In diesen Prüfkammern 5.1.1, 5.1.3-5.1.6, 5.2.1, 5.2.3-5.2.6 wird gerade die Verpackung eines Produkts 3a auf Dichtheit überprüft.

Die Verpackungen der zu prüfenden Produkte 3a kommen in vorgegebenen Abständen von der Eingangsseite 1a auf dem Längsförderer 2 im System 1 an. Die Roboter 7a, 7b greifen mittels Sauggreifer 8 sowohl je ein ungeprüftes Produkt 3a vom Längsförderer 2 als auch je ein geprüftes Produkt 3b aus der jeweiligen Prüfkammer 5.1.2, 5.2.2. Das entsprechende Vakuum an den Sauggreifern 8 wird mit Kompaktejektoren erzeugt. Die Verschlauchung 21 zur Druckluftversorgung wird durch die Hohlachse 12 (Fig. 1) der Roboter 7a, 7b geführt. Nach dem Anheben der Produkte 3a, 3b rotieren die Roboter 7a, 7b die Sauggreifer 8 um 180° um eine Drehachse A - sowie die Servomotoren oder eine Drehvorrichtung 11 (Fig. 5 und 6) der Sauggreifer 8 die Produkte 3a, 3b relativ zur Roboterdrehung um eine Drehachse B - und legen anschließend jeweils die geprüften Produkte 3b zurück auf den Längsförderer 2 und die beiden ungeprüften Produkte 3a in die Prüfkammern 5.1.2, 5.2.2. Die Drehung um die Drehachse A (angedeutet durch die Richtungspfeile) erfolgt mit hoher Winkelbeschleunigung, sodass ein Aufstauen der kontinuierlich auf dem Längsförderer 2 weitergeförderten Produkte 3a, 3b verhindert wird.

Anschließend werden die weiteren Prüfkammern der Reihe nach von den Robotern 7a, 7b angefahren. Wenn alle Prüfkammern bedient worden sind, beginnt der Prozess von vorne. Die weiteren Prüfkammern können von den Robotern 7a, 7b auch im oder gegen den Uhrzeigersinn angefahren werden. Bevorzugt werden die Prüfkammern abwechselnd schräg gegenüber voneinander von den Robotern 7a, 7b angefahren. Also durch den ersten Roboter 7a in der Reihenfolge der Prüfkammern 5.1.1, 5.1.5, 5.1.3, 5.1.6, 5.1.2 und 5.1.4 und dann wieder von vorn. Für den zweiten Roboter 7b in der Reihenfolge der Prüfkammern 5.2.1, 5.2.5, 5.2.3, 5.2.6, 5.2.2 und 5.2.4 und dann wieder von vorn. Dies sorgt insgesamt für eine verbesserte Durchlaufrate auch bei Einzelprüfung der Produkte 3a, 3b in den Prüfkammern 5 des Systems 1.

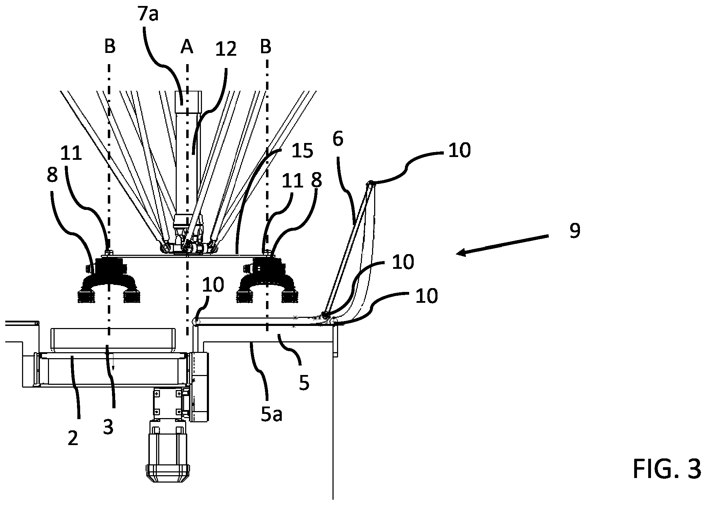

Die Figur 3 zeigt eine Deckelfördervorrichtung 9 zum Öffnen und Schließen der jeweiligen Prüfkammer 5 mittels des jeweiligen Deckels 6. Die Öffnung und Schließung des Deckels 6 der jeweiligen Prüfkammer 5 erfolgt in diesem Ausführungsbeispiel über Laufbahnen 10 einer Führungshalterung in einem Winkel von ca. 80° zur Bodenfläche 5a der Prüfkammer 5. Durch die Deckelfördervorrichtung 9 ist ein schnelles Öffnen und Schließen des Deckels 6 (< 0,5 s) auf besonders einfache und platzsparende Art und Weise möglich.

Die Unterbringung und Anbindung der Komponenten zur Vakuumerzeugung in den Prüfkammern 5 und zur Schutzgasmessung, in diesem Ausführungsbeispiel eine CO₂-Messung, bestehend aus einer Vakuumpumpe, Verschlauchung, einem ersten Ventil, einem zweiten Ventil, eine Analysepumpe und CO₂-Sensoren (jeweils nicht dargestellt), ist unterhalb des Längsförderers 2 vorgesehen.

Nachdem der Roboter 7a, 7b das zu prüfende Produkt 3a in der Prüfkammer 5 abgelegt hat und sich nicht mehr im Kollisionsbereich mit dem Deckel 6 befindet, schließt dieser in weniger als 0,5 Sekunden. Unmittelbar, bevor die Prüfkammer 5 geschlossen ist, taktet das erste Ventil, welches unter der Prüfkammer 5 angeordnet ist, und die Evakuierung der Prüfkammer 5 durch die Vakuumpumpe beginnt. Sobald der geforderte absolute Druck erreicht ist und die Verpackung des Produkts 3a aufgrund der Druckdifferenz aufgebläht ist, beginnt die Schutzgassensorik, in diesem Ausführungsbeispiel ein CO₂-Sensor, die CO₂-Messung. Das Messergebnis wird anschließend an die Anlagensteuerung und von dort gegebenenfalls an höher gelagerte Steuerungsinstanzen übermittelt. Nachdem der Messprozess beendet ist, wird der Deckel 6 geöffnet, das dann geprüfte Produkt 3b samt Verpackung entnommen, zurück auf den Längsförderer 2 befördert und schließlich mittels des Längsförderers 2 zur Ausgangseite 1b des Systems 1 gefördert. Zudem wird die Prüfkammer 5 über eine geeignete Vorrichtung (hier nicht dargestellt) mit Atmosphäre oder einer Überdruckversorgung beaufschlagt, um Rückstände des Schutzgases auszuspülen. Diese Vorrichtung wird über das zweite Ventil angesteuert. Das zweite Ventil kann als Magnetventil oder als pneumatisches Schrägsitzventil ausgeführt sein.

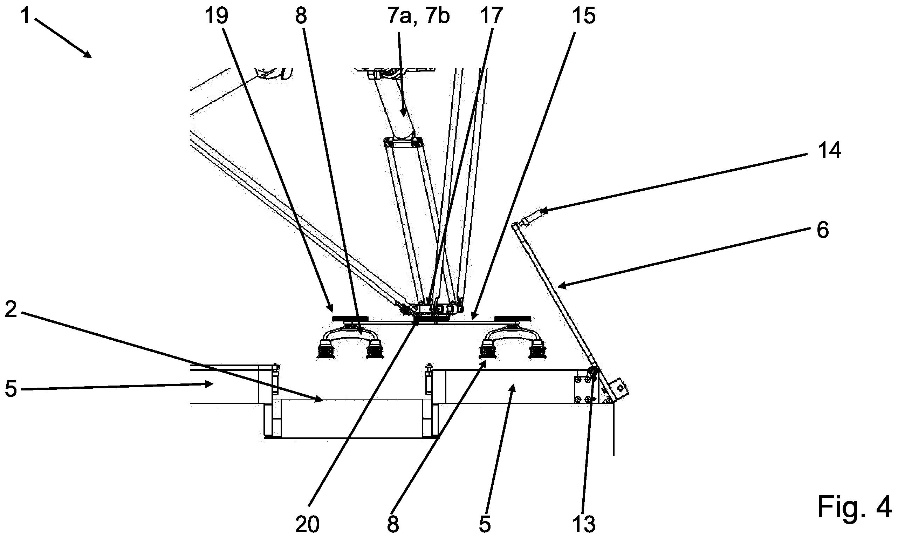

**In** Figur 4 ist eine alternative Ausführung der Deckelfördervorrichtung 9 zum Öffnen und Schließen der jeweiligen Prüfkammer 5 mittels des jeweiligen Deckels 6 gezeigt. Der jeweilige Deckel 6 der jeweiligen Prüfkammer 5 kann hier mittels der Deckelfördervorrichtung 9 zwischen einer Schließposition und einer Öffnungsposition hin und her geklappt werden. Die Deckelfördervorrichtung 9 weist hierzu ein Scharnier 13 auf, über welches der Deckel 6 klappbar an der Prüfkammer 5 aufgehängt ist. Zur schnellen Bewegung des Deckels 6 zwischen der Öffnungsposition und der Schließposition ist ein pneumatisch angetriebener Antriebszylinder 14 an jeder Deckelfördervorrichtung 9 vorgesehen. Hierdurch lässt sich jede Prüfkammer 5 über einen Deckel 6 schnell öffnen und schließen. Der Deckel 6 sollte vorteilhafterweise zwischen der Öffnungsposition und der Schließposition in einem Öffnungswinkel von null bis 60 Grad bezogen auf die Bodenfläche 5a der Prüfkammer 5 bewegt werden.

Die Figur 5 zeigt eine Detailansicht auf einen Roboter 7a, 7b eines erfindungsgemäßen Systems 1. **In** der hier gezeigten Ausführung verfügen die bevorzugt als Delta-Roboter ausgebildeten Roboter 7a, 7b über einen um die Drehachse A (Fig. 3) drehbaren Querträger 15 für die beanstandet zur Drehachse A hieran gegenüberliegend angeordneten Sauggreifer 8. Der Querträger 15 ist an der über den Delta-Roboter gegenüber der Basis 16 (Fig. 1) parallel verschieblichen beweglichen Plattform 17 drehbar gelagert.

Die Sauggreifer 8 werden bei einer Drehung des Querträgers 15 um die Drehachse A über eine Drehvorrichtung 11 jeweils relativ um eine Drehachse B (Fig. 3) am Querträger 15 ausgerichtet, sodass über die Sauggreifer 8 angehobene Produkte 3a, 3b bei einer Rotation des Querträgers 15 ihre räumliche Ausrichtung beibehalten. So können die auf dem Längsförderer 2 in vorgegebenen Abständen platzierten Produkte 3a, 3b besonders schnell passend in die Prüfkammern 5 gelegt und nach der Überprüfung weiterhin entsprechend beabstandet zurück auf den Längsförderer 2 zurückgelegt werden. Die Drehvorrichtung 11 verfügt über einen Riementrieb 18, der um Drehscheiben 19 der Sauggreifer 8 gelegt ist, welche um die Drehachsen B drehbar am Querträger 15 gelagert sind. An der im Raum und zur fest montierten Basis 16 stets gleich orientierten der Plattform 15 des Roboters 7a, 7b ist ein Sonnenrad 20 vorgesehen, welches in Figur 6 besser zu sehen ist. Um dieses feste Sonnenrad 20 liegt der Riementrieb 18 an, sodass bei Drehung des Querträgers 15 um die Drehachse A herum die Drehschreiben 19 der Sauggreifer 8 so von dem Riementrieb 18 angetrieben werden, dass die Sauggreifer 8 an dem Querträger 15 die Orientierung im Raum und zu dem Längsförderer 2 und den Prüfkammern 5 beibehalten. Auf diese Weise lassen sich die auf dem Längsförderer 2 nebeneinander platzierten Produkte 3a, 3b besonders exakt in die Prüfkammern 5 legen und nach der Überprüfung weiterhin entsprechend korrekt ausgerichtet zurück auf den Längsförderer 2 legen. Über die Sauggreifer 8 greift jeder Roboter 7a, 7b jeweils gleichzeitig ein einzelnes ungeprüftes Produkt 3a vom Längsförderer 2 und ein einzelnes geprüftes Produkt 3b aus einer Prüfkammer 5. Nach dem Anheben der Produkte 3a, 3b über die Sauggreifer 8 rotieren die Roboter 7a, 7b die Querträger 15 um 180° um die Drehachse A. Über die Drehvorrichtung 11 der Sauggreifer 8 werden die Produkte 3a, 3b relativ zur Drehung des Querträgers 15 um die Drehachse B gedreht und bleiben so beim Wechsel zwischen dem Längsförderer 2 und den Prüfkammern 5 gleich im Raum orientiert. Über die Sauggreifer 8 legt jeder Roboter 7a, 7b jeweils gleichzeitig ein einzelnes geprüftes Produkt 3b auf den Längsförderer 2 und ein einzelnes ungeprüftes Produkt 3a in eine Prüfkammer 5. Der über das feste Sonnenrad 20 geführte Riementrieb bietet eine einfache Möglichkeit die Produkte 3a, 3b schnell passend an den Prüfkammern 5 und an dem Längsförderer 2 auszurichten.

In Figur 6 ist zu erkennen, dass die Verschlauchung 21 zur Druckluftversorgung der Sauggreifer 8 durch die Hohlachse 12 (Fig. 1) der Roboter 7a, 7b geführt ist. Die Verschlauchung 21 wird auch durch das feste Sonnenrad 20 an der Plattform 15 der Roboter 7a, 7b geführt. Die Verschlauchung 21 führt jeweils entlang der Drehachse B in die Sauggreifer 8. Die im Ausführungsbeispiel gezeigten Sauggreifer 8 weisen jeweils vier Faltenbalge 22 mit Saugnäpfen auf, an denen jeweils ein Unterdruck zu den Verpackungen der Produkte 3a, 3b aufgebaut wird. Je nach Ausgestaltung der zu prüfenden Produktverpackungen kann auch eine von vier abweichende Zahl von Faltenbalgen 22 mit Saugnäpfen verwendet werden. Die Größe und Anordnung der Faltenbalge 22 mit Saugnäpfen der Sauggreifer 8 kann abhängig von der Ausgestaltung der zu prüfenden Produktverpackungen ebenfalls angepasst werden.

### Bezugszeichenliste:

- 1: System
- 1a: Eingangsseite
- 1b: Ausgangsseite
- 2: Längsförderer
- 3: Produkt
- 3a: ungeprüftes Produkt
- 3b: geprüftes Produkt
- 4: Einhausung
- 5: Prüfkammer
- 5a: Bodenfläche
- 6: Deckel
- 7a, 7b: Roboter
- 8: Sauggreifer
- 9: Deckelfördervorrichtung
- 10: Laufbahn (Führungshalterung)
- 11: Drehvorrichtung
- 12: Hohlachse
- 13: Scharnier
- 14: Antriebszylinder
- 15: Querträger
- 16: Basis
- 17: Plattform
- 18: Riementrieb
- 19: Drehscheiben
- 20: Sonnenrad
- 21: Verschlauchung
- 22: Faltenbalge
- A,B: Drehachsen

## Patentansprüche

1. System (1) zur Überprüfung der Dichtheit einer Vielzahl von unter Schutzgas stehenden Verpackungen, mit mindestens einem Längsförderer (2) zur Förderungen von Verpackungen mit darin befindlichen Produkten (3a, 3b), mindestens einem Roboter (7a, 7b) und einer Prüfkammer (5), welche seitlich neben dem Längsförderer (2) angeordnet ist, mittels eines der Prüfkammer (2) zugeordneten Deckels (6) gasdicht verschließbar ist, eine Schutzgas-Sensorik und/oder eine Druck-Sensorik aufweist und im verschlossenen Zustand mit Vakuum beaufschlagbar ist, wobei der Roboter (7a, 7b) dazu eingerichtet ist, die in der Verpackung befindlichen Produkte (3a, 3b) vom Längsförderer (2) in die Prüfkammer (5) auf eine Bodenfläche (5a) der Prüfkammer (5) und von der Bodenfläche (5a) der Prüfkammer (5) zurück auf den Längsförderer (2) zu legen,
wobei mindestens zwei Prüfkammern (5) entlang des Längsförderers (2) angeordnet sind, **dadurch gekennzeichnet, dass** der Roboter (7a,7b) jeweils mit zwei Sauggreifern (8) versehen ist, welche um eine gemeinsame Drehachse (A) drehbar und bezogen auf die Drehachse (A) gegenüberliegend angeordnet sind, wobei der Roboter (7a,7b) dazu eingerichtet ist, jeweils ein ungeprüftes Produkt (3a) vom Längsförderer (2) und ein geprüftes Produkt (3b) aus einer Prüfkammer (5) gleichzeitig zu greifen und diese gegeneinander austauschen.

2. System (1) nach Anspruch 1, **dadurch gekennzeichnet, dass** entlang des Längsförderers (2) beidseitig jeweils mindestens eine Prüfkammer (5) angeordnet ist.

3. System (1) nach Anspruch 1 oder 2, **dadurch gekennzeichnet, dass** entlang des Längsförderers (2) beidseitig jeweils mindestens zwei Prüfkammern (5) angeordnet sind, vorzugsweise jeweils mindestens vier Prüfkammern (5), und mindestens zwei Roboter (7a, 7b) vorgesehen sind.

4. System (1) nach einem der vorgenannten Ansprüche, **dadurch gekennzeichnet, dass** die Roboter (7a, 7b) als Delta-Roboter ausgebildet sind.

5. System (1) nach einem der vorgenannten Ansprüche, **dadurch gekennzeichnet, dass** der bzw. die Roboter (7a, 7b) mittig über dem Längsförderer (2) angeordnet sind.

6. System (1) nach einem der vorgenannten Ansprüche, **dadurch gekennzeichnet, dass** die Prüfkammern (5) mittels einer Vakuumpumpe mit Vakuum beaufschlagbar sind.

7. System (1) nach einem der vorgenannten Ansprüche, **dadurch gekennzeichnet, dass** der Deckel (6) der jeweiligen Prüfkammer (5) mittels einer Deckelfördervorrichtung (9) in eine Schließposition und eine Öffnungsposition bewegbar ist.

8. System (1) nach Anspruch 7, **dadurch gekennzeichnet, dass** die Deckelfördervorrichtung (9) eine Führungshalterung (10) aufweist, welche bezogen auf die Bodenfläche (5a) der Prüfkammer (5) in einem Winkel von 70° - 110°, vorzugsweise 80° - 100° angeordnet ist.

9. System (1) nach Ansprüche 8, **dadurch gekennzeichnet, dass** die Deckelförderfördervorrichtung (9) mindestens zwei Laufrollen (10) aufweist.

10. System (1) nach einem der vorgenannten Ansprüche, **dadurch gekennzeichnet, dass** an der Bodenfläche (5a) der einzelnen Prüfkammern (5) eine Überdruckversorgung angeordnet ist.

11. Verfahren für den Betrieb eines Systems nach einem der vorgenannten Ansprüche, bei welchem
- in einer Verpackung verpackte, zu prüfende Produkte (3a) mittels des Längsförderers (2) dem System (1) von einer Eingangsseite (1a) zugeführt werden,
- die zu prüfenden Produkte (3a) mittels des Roboters (7a, 7b) bzw. der Roboter (7a, 7b) vom Längsförderer (2) in die jeweils geöffneten Prüfkammern (5) befördert werden,
- die jeweilige Prüfkammer (5) mittels des Deckels (6) gasdicht verschlossen wird, indem der Deckel (6) mittels der Deckelfördervorrichtung von der Öffnungsposition in die Schließposition bewegt wird, und anschließend mit Vakuum beaufschlagt wird,
- die Dichtheit der Verpackungen der Produkte (3a) mittels der Schutzgas-Sensorik und/oder der Druck-Sensorik überprüft wird,
- anschließend der Deckel der jeweiligen Prüfkammer mittels der Deckelfördervorrichtung (9) von der Schließposition in die Öffnungsposition bewegt wird und (3b) mittels des Roboters (7a, 7b) oder der Roboter (7a, 7b) die geprüften Produkte (3b) aus der jeweiligen Prüfkammer (5) auf den Längsförderer (2) gelegt werden, wobei gleichzeitig mit der Beförderung eines zu prüfenden Produktes (3a) vom Längsförderer (2) in die jeweilige Prüfkammer (5) ein geprüftes Produkt (3b) aus dieser Prüfkammer (5) mittels des jeweiligen Roboters (7a,7b) auf den Längsförderer (2) befördert wird
- und die Produkte mittels des Längsförderers (2) in Richtung einer Ausgangsseite (1a) des Systems (1) verbracht werden, wobei geprüfte Produkte (3b), die die Überprüfung der Dichtheit nicht bestanden haben, anschließend ausgeschleust werden.

12. Verfahren nach Anspruch 11, **dadurch gekennzeichnet, dass** die Überprüfung der Dichtheit in den jeweiligen Prüfkammern (5) in aufeinander abgestimmten Zyklen erfolgt, sodass eine möglichst hohe Stückzahl von Produkten (3a,3b) überprüft wird.

13. Verfahren nach Anspruch 11 oder 12, **dadurch gekennzeichnet, dass** die Prüfkammer (5) nach der Überprüfung der Dichtheit und nach der Öffnung der Prüfkammer (5) von unten mit Überdruck oder Atmosphäre beaufschlagt wird.

14. Verfahren nach einem der Ansprüche 11 bis 13, **dadurch gekennzeichnet, dass** die Überprüfung der Dichtheit der Verpackungen der Produkte (3a) bereits während der Beaufschlagung der Prüfkammern (5) mit Vakuum erfolgt.

## Claims

1. System (1) for checking the sealing tightness of a plurality of packagings filled with protective gas, comprising: at least one longitudinal conveyor (2) for conveying products (3a, 3b) contained in the packagings, at least one robot (7a, 7b) and an examination chamber (5), which is located laterally adjacent to the longitudinal conveyor (2), can be closed gas-tight by means of a cover (6) associated with the examination chamber (2) and has a protective-gas sensor system and/or a pressure sensor system and to which vacuum can be applied when the examination chamber is in the closed state, wherein the robot (7a, 7b) is designed to lay the products (3a, 3b) contained in the packaging from the longitudinal conveyor (2) into the examination chamber (5) and onto a bottom surface (5a) of the examination chamber (5) and from the bottom surface (5a) of the examination chamber (5) back onto the longitudinal conveyor (2), wherein at least two examination chambers (5) are arranged along the longitudinal conveyor (2), **characterized in that** the robot (7a, 7b) is each provided with two suction grippers (8) that can rotate about a common axis of rotation (A) and are arranged opposite one another with respect to the axis of rotation (A), wherein the robot (7a, 7b) is configured to simultaneously grasp each an uninspected product (3a) from the longitudinal conveyor (2) and an inspected product (3b) from an inspection chamber (5) and to exchange them with one another.

2. System (1) according to claim 1, **characterised in that** at least one examination chamber (5) is each arranged along both sides of the longitudinal conveyor (2).

3. System (1) according to claim 1 or 2, **characterised in that** at least two examination chambers (5), preferably at least four examination chambers (5), are each arranged along both sides of the longitudinal conveyor (2), and at least two robots (7a, 7b) are provided.

4. System (1) according to any one of the preceding claims, **characterised in that** the robots (7a, 7b) are designed as delta robots.

5. System (1) according to any one of the preceding claims, **characterised in that** the robot(s) (7a, 7b) are arranged centrally over the longitudinal conveyor (2).

6. System (1) according to any one of the preceding claims, **characterised in that** the examination chambers (5) can be subjected to a vacuum by means of a vacuum pump.

7. System (1) according to any one of the preceding claims, **characterised in that** the cover (6) of each examination chamber (5) can be moved into a closed position and an open position by means of a cover conveyor device (9).

8. System (1) according to claim 7, **characterised in that** the cover conveyor device (9) has a guide holder (10) arranged at an angle of 70°-110°, preferably 80°-100°, with respect to the bottom surface (5a) of the examination chamber (5).

9. System (1) according to claim 8, **characterised in that** the cover conveyor device (9) has at least two rollers (10).

10. System (1) according to any one of the preceding claims, **characterised in that** an overpressure supply is arranged on the bottom surface (5a) of the individual examination chambers (5).

11. Method for operating a system according to any one of the preceding claims, in which
- products (3a) to be checked that are packaged in a packaging are fed to the system (1) from an input side (1a) by means of the longitudinal conveyor (2),
- the products (3a) to be checked are conveyed by the robot (7a, 7b) or robots (7a, 7b) from the longitudinal conveyor (2) into the respective open examination chambers (5),
- the respective examination chamber (5) is sealed in a gas-tight manner by means of the cover (6) by moving the cover (6) from the open position to the closed position by means of the cover conveyor device and then subjecting it to a vacuum,
- the sealing tightness of the packagings of the products (3a) is checked by means of the protective gas sensors and/or the pressure sensors,
- the cover of the respective examination chamber is then moved from the closed position to the open position by means of the cover conveyor device (9) and the checked products (3b) are placed from the respective examination chamber (5) onto the longitudinal conveyor (2) by means of the robot (7a, 7b) or robots (7a, 7b), wherein simultaneously with the transfer of a product (3a) to be checked from the longitudinal conveyor (2) into the respective examination chamber (5), a checked product (3b) is transferred from that examination chamber (5) onto the longitudinal conveyor (2) by means of the respective robot (7a, 7b)
- and the products are conveyed towards an output side (1a) of the system (1) by means of the longitudinal conveyor (2), wherein checked products (3b) that have not passed the sealing tightness check are subsequently discharged.

12. Method according to claim 11, **characterised in that** the sealing tightness is checked in the respective examination chambers (5) in coordinated cycles so that the highest possible number of products (3a, 3b) is checked.

13. Method according to claim 11 or 12, **characterised in that** the examination chamber (5) is pressurised or subjected to atmosphere from below after the sealing tightness has been checked and after the examination chamber (5) has been opened.

14. Method according to any one of claims 11 to 13, **characterised in that** the sealing tightness of the packagings of the products (3a) is checked while the examination chambers (5) are being subjected to vacuum.

## Revendications

1. Système (1) destiné à contrôler l'étanchéité d'une pluralité d'emballages sous gaz protecteur, avec au moins un convoyeur longitudinal (2) destiné à acheminer des emballages contenant des produits (3a, 3b), au moins un robot (7a, 7b) et une chambre de contrôle (5), qui est disposée latéralement à côté du convoyeur longitudinal (2), qui peut être fermée de manière étanche au gaz au moyen d'un couvercle (6) associé à la chambre de contrôle (5), qui comporte un système de capteurs de gaz protecteur et/ou un système de capteurs de pression et qui peut être mise sous vide lorsqu'elle est fermée, dans lequel le robot (7a, 7b) est conçu pour transférer les produits (3a, 3b) se trouvant dans l'emballage depuis le convoyeur longitudinal (2) vers la chambre de contrôle (5), sur une surface de fond (5a) de celle-ci, puis de la surface de fond (5a) de la chambre de contrôle (5) vers le convoyeur longitudinal (2), dans lequel au moins deux chambres de contrôle (5) étant disposées le long du convoyeur longitudinal (2), **caractérisé en ce que** le robot (7a, 7b) est muni à chaque fois de deux ventouses (8) qui peuvent tourner autour d'un axe de rotation commun (A) et sont disposées de manière opposée par rapport à l'axe de rotation (A), dans lequel le robot (7a, 7b) est conçu pour saisir simultanément un produit non contrôlé (3a) sur le convoyeur longitudinal (2) et un produit contrôlé (3b) dans une chambre de contrôle (5), puis pour les échanger l'un contre l'autre.

2. Système (1) selon la revendication 1, **caractérisé en ce qu'**au moins une chambre de contrôle (5) est disposée de chaque côté le long du convoyeur longitudinal (2).

3. Système (1) selon la revendication 1 ou 2, **caractérisé en ce qu'**au moins deux chambres de contrôle (5) sont disposées de chaque côté du convoyeur longitudinal (2), de préférence au moins quatre chambres de contrôle (5) de chaque côté, et qu'au moins deux robots (7a, 7b) sont prévus.

4. Système (1) selon l'une des revendications précédentes, **caractérisé en ce que** les robots (7a, 7b) sont conçus comme des robots delta.

5. Système (1) selon l'une des revendications précédentes, **caractérisé en ce que** le ou les robots (7a, 7b) sont disposés au centre, au-dessus du convoyeur longitudinal (2).

6. Système selon l'une des revendications précédentes, **caractérisé en ce que** les chambres de contrôle (5) peuvent être mises sous vide à l'aide d'une pompe à vide.

7. Système (1) selon l'une des revendications précédentes, **caractérisé en ce que** le couvercle (6) de chaque chambre de contrôle (5) peut être déplacé vers une position fermée et une position ouverte à l'aide d'un dispositif de manutention de couvercle (9).

8. Système (1) selon la revendication 7, **caractérisé en ce que** le dispositif de manutention de couvercle (9) comporte un support de guidage (10) qui est disposé selon un angle de 70° à 110°, de préférence de 80° à 100°, par rapport à la surface inférieure (5a) de la chambre de contrôle (5).

9. Système (1) selon la revendication 8, **caractérisé en ce que** le dispositif de manutention de couvercle (9) comporte au moins deux galets de roulement (10).

10. Système (1) selon l'une des revendications précédentes, **caractérisé en ce qu'**une alimentation en surpression est disposée au niveau de la surface inférieure (5a) de chacune des chambres de contrôle (5).

11. Procédé d'exploitation d'un système selon l'une des revendications précédentes, dans lequel
- les produits à contrôler (3a), emballés dans un emballage, sont acheminés vers le système (1) depuis un côté d'entrée (1a) au moyen du convoyeur longitudinal (2),
- les produits à contrôler (3a) sont transférés, à l'aide du ou des robots (7a, 7b), du convoyeur longitudinal (2) vers les chambres de contrôle (5) respectivement ouvertes,
- la chambre de contrôle (5) correspondante est fermée de manière étanche aux gaz à l'aide du couvercle (6), ce dernier étant déplacé de la position ouverte à la position fermée par le dispositif de transport du couvercle, puis mise sous vide,
- l'étanchéité des emballages des produits (3a) est contrôlée à l'aide de capteurs de gaz protecteur et/ou de capteurs de pression,
- ensuite, le couvercle de la chambre de contrôle correspondante est déplacé de la position fermée à la position ouverte à l'aide du dispositif de transport de couvercles (9), et les produits contrôlés (3b) sont transférés hors de la chambre de contrôle correspondante (5) à l'aide du robot (7a, 7b) ou des robots (7a, 7b) vers le convoyeur longitudinal (2), dans lequel un produit contrôlé (3b) étant transféré de cette chambre de contrôle (5) vers le convoyeur longitudinal (2) à l'aide du robot correspondant (7a, 7b) simultanément au transfert d'un produit à contrôler (3a) du convoyeur longitudinal (2) vers la chambre de contrôle correspondante (5)
- et les produits sont acheminés par le convoyeur longitudinal (2) vers un côté sortie (1a) du système (1), les produits contrôlés (3b) qui n'ont pas passé le contrôle d'étanchéité étant ensuite éjectés.

12. Procédé selon la revendication 11, **caractérisé en ce que** le contrôle d'étanchéité dans les chambres de contrôle respectives (5) s'effectue selon des cycles coordonnés, de manière à contrôler un nombre aussi élevé que possible de produits (3a, 3b).

13. Procédé selon la revendication 11 ou 12, **caractérisé en ce que**, après le contrôle d'étanchéité et l'ouverture de la chambre de contrôle (5), celle-ci est soumise, par le bas, à une surpression ou à la pression atmosphérique.

14. Procédé selon l'une des revendications 11 à 13, **caractérisé en ce que** le contrôle de l'étanchéité des emballages des produits (3a) s'effectue dès la mise sous vide des chambres de contrôle (5).
